# EUROPEAN PATENT APPLICATION

(11) **EP 3 244 648 A1**
(43) Date of publication of application: **15.11.2017**
(21) Application number: 17170035.4
(22) Date of filing: 09.05.2017
(51) Int. Cl.: H04W 16/14, H04W 74/04

(54) **WIRELESS COMMUNICATION SYSTEMS COEXISTENCE**

(30) Priority: 12.05.2016 EP 16169394
(71) Applicant: Koninklijke KPN N.V., 2516 CK The Hague (NL); Nederlandse Organisatie voor toegepast- natuurwetenschappelijk onderzoek TNO, 2595 DA 's-Gravenhage (NL)
(72) Inventor: TRICHIAS, Konstantinos, 2517 VH The Hague (NL); ZHANG, Haibin, 2274 EA Voorburg (NL)
(74) Representative: Wuyts, Koenraad Maria

(57) **Abstract**

One or more wireless communication systems may coexist at about the same geographical location and be configured to access the same radio channel. The coexistence of these systems may cause collisions and degrade throughput. Although countermeasures, such as reserving airtime with a resource assignment, may be taken to avoid collisions, these countermeasures are degrading throughput as well. The reserved airtime is reduced by adding a start time to the resource assignment. The reduced airtime may be used by others for performing a transmission, thus increasing the throughput and efficiency of the access to the radio channel.

## Description

### FIELD OF THE INVENTION

The invention relates to the field of coexistence of wireless communication systems. The invention further relates to a communication arrangement comprising a first wireless communication system and a second wireless communication system configured for sharing a radio channel. The invention further relates to a wireless station wireless user equipment and a wireless access node for the communication arrangement.

### BACKGROUND OF THE INVENTION

The radio spectrum for wireless communication is divided up in licensed radio bands and unlicensed radio bands. So-called licensed radio bands are licensed to public wireless network operators, non-public wireless network operators, such as emergency services, the military, the police, and/or other non-public operators. So-called unlicensed radio bands can be used by anyone without obtaining a license for that radio band, as long as they adhere to certain common rules of co-existence, such as for example maximum transmission power per user. The division of licensed and unlicensed radio bands may differ per country or region.

An example of a communication system using the licensed radio band is Long Term Evolution (LTE). The use of LTE communication systems and thereby the use of the licensed radio band has grown over the years. Because of this growth, driven by the ever increasing demand for high throughputs, LTE is being extended to also use the unlicensed radio band, such as the industrial, scientific and medical (ISM) band, to satisfy this growth of communication of LTE. These extensions are e.g. Long Term Evolution - Licensed Assisted Access (LTE-LAA) or Long Term Evolution - Unlicensed (LTE-U).

The unlicensed radio band is crowded with different radio access technologies, such as WiFi, ZigBee, Bluetooth, 2.4GHz cordless telephone, etc. , all competing for access to the unlicensed radio band in order to transmit. The unlicensed band becomes even more crowded when LTE starts to use this radio band as well. A problem with the coexistence of multiple users, utilizing different radio access technologies in the same band, is that they may try to make use of the common channel (transmit) at the same time. If transmissions at the same time within radio range of each other occur, these transmissions may collide, causing both transmissions not to be received by their intended recipients. Hence throughput of data may significantly deteriorate and channel efficiency may decrease.

To overcome the issue of multiple transmissions colliding a reservation signal could be used, in order to reserve a channel until a user terminal is able to start its transmission. With this method a significant amount of resources are wasted since the reservation signal just occupies the channel without transmitting any useful content, thus the resource efficiency in the unlicensed spectrum is significantly compromised.

### SUMMARY OF THE INVENTION

An objective of the invention is to improve the efficiency of coexisting wireless communication systems.

As a first aspect, the invention provides a communication arrangement comprising a first wireless communication system configured for accessing a radio channel and a second wireless communication system configured for accessing the radio channel; wherein the first wireless communication system comprises: wireless user equipment comprising a reservation request unit configured for transmitting a resource request message for reserving access to the radio channel; and a wireless access node comprising a scheduler configured for receiving the resource request message and upon receiving, generating and providing a resource assignment for reserving access time for the wireless user equipment to access the radio channel; wherein the second wireless communication system comprises a wireless station comprising a reservation handling unit configured for receiving and/or obtaining the resource assignment from the wireless access node and for preventing the wireless station from accessing the radio channel during the access time of the resource assignment; and wherein the resource assignment comprises a start time for indicating a start of the access time of the resource assignment for allowing the wireless station access to the radio channel until the start time.

According to the invention, a Radio Access Technology (RAT) allowing a radio channel reservation, reservation assignment or resource assignment of the radio channel may use a reservation message comprising a resource assignment. The resource assignment may comprise an identification of a transmitter to which the assignment is done, the radio channel to be accessed for the transmission and optionally an end time until which the radio channel is reserved or assigned. The radio channel may be constituted by a frequency resource or frequency spectrum. The radio channel may be reserved for transmission according to rules defined in IEEE802.11, also known as WiFi, in the ISM band.

The first wireless communication system may adhere to a first radio access technology (RAT) and comprise a wireless access node. The wireless access node may receive a resource request message and upon reception, may transmit a resource assignment message. The resource assignment message may comprise the resource assignment. Hence the wireless access node controls the resource assignments in a centralized manner.

A wireless access node assigning the radio channel to a transmitter or wireless user equipment needs to allow the transmitter to process the resource assignment message and get the transmitter configured for using the resource assignment. Hence the resource assignment, comprised in the resource assignment message, needs to be ahead in time. The time between the transmission of the resource assignment message and the start of the resource assignment is called assignment latency.

The second wireless communication system may adhere to a second RAT and comprises a wireless station. The second wireless communication system may be controlled in any way, such as centrally controlled, controlled in a distributed manner or controlled in an ad hoc manner.

Two wireless communication systems may coexist in an area. Coexist means that both wireless communication systems access the same radio channel, access radio channels that overlap or access radio channels that at least cause interference to each other when used at the same time. Hence a first transmission of a first wireless communication system may cause a corruption of a second transmission of a second wireless communication system. The corruption of the second transmission may also be called a collision.

In the case of two coexisting wireless communication systems according to the prior art, wherein the first wireless communication system is centrally controlled and the second wireless communication system allows for resource assignments without a start time, it is an insight of the inventors that access to the radio channel is prevented for the wireless station at least during the time between the transmission of the resource assignment message and the start of the resource assignment (that is during the assignment latency). If no transmissions were scheduled by the first wireless communication system during the assignment latency, then the radio channel may be inaccessible for both wireless communication systems and the time during the assignment latency is wasted for both wireless communication systems.

Furthermore, the advantage of providing a start time in the resource assignment is that it renders the radio channel at least partly accessible during the assignment latency. The radio channel, being accessible until the start time, provides more time for the wireless station to access the radio channel. And if the end of the assignment latency coincides with the start time, the radio channel is accessible for the wireless station during the whole assignment latency. Hence incorporating the start time in the resource assignment increases the time the wireless station may access the radio channel and thus enhances the efficiency of the cooperation of the coexisting wireless communication systems.

In an embodiment, the invention provides a communication arrangement wherein the resource assignment comprises an end time for indicating an end of the access time of the resource assignment. The embodiment advantageously specifies the duration of the resource assignment, preventing additional communication between the wireless access node and the wireless station next to the communication for the resource assignment.

In an embodiment, the invention provides a communication arrangement wherein the scheduler is further configured for composing a resource assignment message, which is transmitted to the wireless user equipment, the resource assignment message comprising the resource assignment. This embodiment advantageously provides the information of the resource assignment to the wireless user equipment, which wireless user equipment may use the resource assignment for wireless communication.

In an embodiment, the invention provides a communication arrangement wherein the first radio access technology and the second radio access technology are different. This embodiment provides the advantage of letting two different radio access technologies cooperate.

In an embodiment, the invention provides a communication arrangement wherein the first wireless communication system is configured to operate according to an LTE standard, such as according to an LTE-LAA standard and/or an LTE-U standard and wherein the resource assignment is configured for providing access to the radio channel for an up-link transmission and wherein the resource assignment message is an up-link grant message. This embodiment specifies a wireless standard which could be used as the radio access technology for the first wireless communication system.

Another aspect is a wireless station for the communication arrangement according to the invention. The wireless station is advantageously able to receive the resource assignment for preventing the wireless station from accessing the radio channel during the access time of the resource assignment.

In an embodiment, the invention provides a wireless station wherein the reservation handling unit is further configured for, upon receiving and/or obtaining the resource assignment, wirelessly broadcasting an assignment publication message comprising the resource assignment for preventing other wireless stations of the second wireless communication system located within the radio range from accessing the radio channel during the access time of the resource assignment. The wireless station advantageously informs other wireless stations located within the radio range of the wireless station to prevent these other wireless stations from accessing or transmitting on the radio channel during the access time of the resource assignment. Preventing other wireless stations of the second wireless communication system located within the radio range from accessing the radio channel during the access time of the resource assignment may also be interpreted as refraining and/or prohibiting other wireless stations of the second wireless communication system located within the radio range from accessing the radio channel during the access time of the resource assignment.

In an embodiment, the invention provides a wireless station wherein the second wireless communication system is configured to operate according to an IEEE802.11 standard and the wireless station is an IEEE802.11 access point or IEEE802.11 client. This wireless station provides the advantage of adhering to the IEEE802.11 standard.

In an embodiment, the invention provides a wireless station wherein the assignment publication message is a clear to send message according to an IEEE802.11 standard, which is extended for incorporating the start time, or is a request to send message according to an IEEE802.11 standard, which is extended for incorporating the start time. The wireless station may advantageously extend a known message from the IEEE802.11 standard for incorporating the information for transferring this information according to an embodiment of the invention.

Another aspect of the invention is wireless user equipment for the communication arrangement, wherein the wireless user equipment comprises the wireless station according to the invention. The wireless user equipment advantageously integrates the wireless station for providing one device.

In an embodiment, the invention provides wireless user equipment configured to operate according to an LTE standard, such as according to an LTE-LAA standard and/or an LTE-U standard, which wireless user equipment is user equipment (UE) according to the LTE standard. This wireless user equipment provides the advantage of adhering to a standard for the wireless user equipment. An example of the wireless user equipment may be a smartphone, which may communicate according to the LTE and WiFi standards.

Another aspect of the invention is a wireless access node for the communication arrangement according to the invention, wherein the wireless access node comprises the wireless station according to the invention. The wireless access node advantageously integrates the wireless station for providing one device.

In an embodiment, the invention provides a wireless access node configured to operate according to an LTE standard, such as according to an LTE-LAA standard and/or an LTE-U standard, which wireless access node is an E-UTRAN Node B or Evolved Node B. The wireless access node may advantageously map the wireless access node on devices which are known from the LTE standard specification.

Another aspect is a method for operating a wireless station according to the invention, comprising the steps of: receiving and/or obtaining the resource assignment from the wireless access node; and preventing the wireless station from accessing the radio channel during the access time of the resource assignment.

Another aspect of the invention is a method for operating wireless user equipment according to the invention, comprising the steps of: transmitting the resource request message for reserving access time for the wireless user equipment to access the radio channel; receiving and/or obtaining the resource assignment from the wireless access node; and preventing the on-board integrated wireless station from accessing the radio channel during the access time of the resource assignment.

Another aspect of the invention is a computer program product for a wireless station comprising a first processor, which computer program product causes the first processor to execute the method according to the invention or for wireless user equipment comprising a second processor, which computer program product causes the second processor to execute the method according to the invention.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fibre, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

Further preferred embodiments of the device and method according to the invention are elucidated in the appended claims, disclosure of which is incorporated herein by reference.

| Abbreviations | |
|---|---|
| CTS | Clear-To-Send |
| DL | Down Link |
| eNB | e-UTRAN Node B |
| e-UTRA | evolved UMTS Terrestrial Radio Access |
| ISM | Industrial, Scientific and Medical |
| LBT | Listen Before Talk |
| LTE | Long Term Evolution |
| LTE-LAA | Long Term Evolution - Licensed Assisted Access |
| LTE-U | Long Term Evolution - Unlicensed |
| PCell | Primary Cell |
| RAT | Radio Access Technology |
| RTS | Request-To-Send |
| SCell | Secundary Cell |
| UE | User Equipment |
| UL | Up Link |
| 3GPP | 3-rd Generation Partnership Project |

### BRIEF DESCRIPTION OF THE DRAWINGS

These and other aspects of the invention will be apparent from and elucidated further with reference to the embodiments described by way of example in the following description and with reference to the accompanying drawings, in which:
Figure 1 shows a sequence diagram 100 of an embodiment of a communication arrangement according to the invention;
Figure 2 shows schematically an embodiment of a communication arrangement according to the invention;
Figure 3 shows schematically an embodiment of a wireless user equipment according to the invention;
Figure 4 shows schematically an embodiment of a wireless access node according to the invention;
Figure 5 shows schematically an embodiment of a communication arrangement according to the invention;
Figure 6 shows schematically an embodiment of a method for operating wireless user equipment according to the invention;
Figure 7 shows schematically an embodiment of a method of a wireless station according to the invention;
Figure 8 shows schematically an embodiment of a computer program product according to the invention; and
Figure 9 is a schematic block diagram of a general system to be employed in the disclosed method.

The figures are purely diagrammatic and not drawn to scale. In the Figures, elements which correspond to elements already described may have the same reference numerals.

### DETAILED DESCRIPTION OF EMBODIMENTS

The following figures detail different embodiments of the invention.

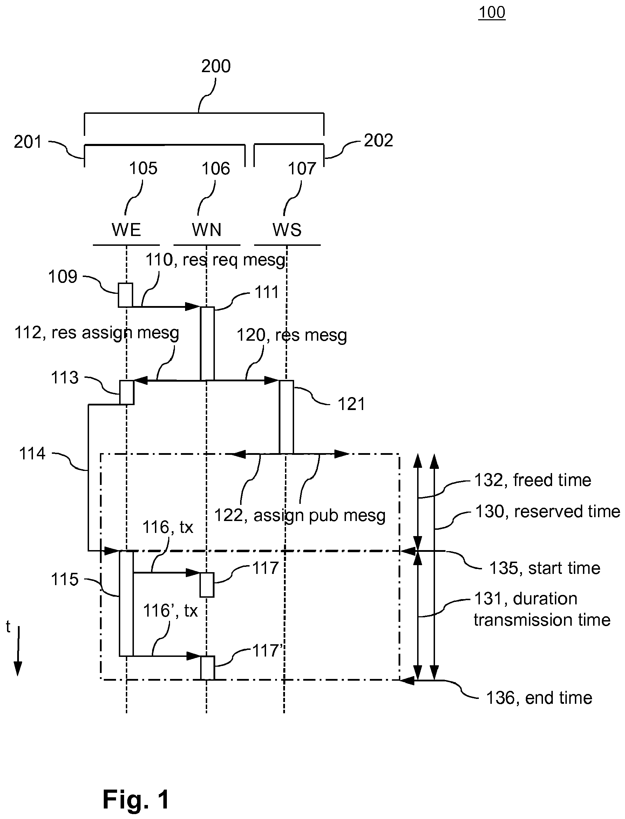

Figure 1 shows a sequence diagram 100 of an embodiment of a communication arrangement 200 according to the invention. Time t progresses from top to bottom for a sequence diagram. Each actor is identified with an abbreviation and is stated with a horizontal line under the abbreviation. Each actor has its own time line. Processing or activity of an actor is indicated with a square on the time line. The height of the square is purely diagrammatical and does not indicate a length of time. There is also no relation between the heights of different squares. Transmission delays are neglected in this sequence diagram.

The communication arrangement comprises a first wireless communication system 201 and a second wireless communication system 202. The first wireless communication system comprises wireless user equipment 105 and a wireless access node 106. The first wireless communication system may adhere to a first radio access technology or standard. The second wireless communication system may adhere to a second radio access technology or standard. The first wireless communication system may be a centrally organised wireless communication system. The wireless access node may control the wireless transmissions for this wireless communication system. The wireless user equipment and the wireless access node may communicate wirelessly with each other. The wireless user equipment may adhere to the transmission control of the wireless access node. The wireless user equipment and the wireless access node have both a radio range. The radio range may be defined as the range in which a transmission of the transmitting device can be correctly received. The radio ranges of the wireless user equipment and the wireless access node have to respectively comprise the location of the wireless access node and the location of the wireless user equipment to be able to wirelessly communicate with each other.

The second wireless communication system comprises a wireless station 107. The second wireless communication system may be a centrally controlled wireless communication system, a distributed controlled wireless communication system or ad hoc controlled wireless communication system. The wireless access node and the wireless station may communicate with each other either via a wired or wireless link. The wireless station has a radio range. The radio range may also be defined as the range in which a transmission corrupts a reception of another transmission. The radio range of the wireless station has to overlap with at least the radio range of the wireless user equipment and/or wireless access node. Typically, the wireless station 107 has a radio range covering at least a location of the wireless user equipment 105 or a location of the wireless access node 106.

The wireless user equipment may have data for transmission to the wireless access node. The wireless user equipment may expect to receive data, which needs to be transmitted to the wireless access node. The wireless user equipment may expect to receive data at regular intervals, which data may need to be transmitted to the wireless access node at regular intervals. The wireless user equipment starts the process for reserving access time by composing a reservation request message 109. The reservation request message is transmitted to the wireless access node and provided to a scheduler for scheduling 111. The wireless access node transmits, after scheduling, a resource assignment message 112 to the wireless user equipment. The resource assignment message may comprise a resource assignment. The resource assignment may comprise a start time 135 and an end time 136. The start time may indicate a start of the reserved access time. The end time may indicate an end of the reserved access time. The start time and the end time together may specify a duration 131 of the reserved access time. The wireless user equipment may process the resource assignment. The wireless user equipment may wait 114 after processing for the resource assignment to occur in time. During the wait the wireless user equipment may perform other tasks. During the access time, the wireless user equipment processes 115 the data to prepare the data for transmission to the wireless access node. During the access time one or more data messages 116, 116' may be transmitted to the wireless access node, which may process the received data messages.

Around the moment in time of the transmission of the resource assignment message 112 the scheduler may also transmit a reservation message to the wireless station. The transmission of the reservation message to the wireless station may be before or after the transmission of the resource assignment message. The transmission of the reservation message to the wireless station has to be at least before the start of the start time in the resource assignment. The transmission of the reservation message may be via a wired or wireless link or a combination of wired and wireless links. The transmission of the reservation message may be via Ethernet, WiFi or any other suitable communication standard. In the case that the wireless access node comprises the wireless station, the transmission of the reservation message may also be done via an internal bus or memory copy.

The wireless station may, upon receiving and/or obtaining the reservation message, process 121 the reservation message. After processing the wireless station may broadcast an assignment publication message 122. The broadcast assignment publication message may notify every other wireless station of the second wireless communication system located within radio range of the wireless station of an upcoming transmission. The other wireless stations as well as the wireless stationcan now refrain from accessing the radio channel during the access time of the resource assignment. All wireless stations not accessing the radio channel during the access time of the resource assignment may prevent thereby collisions between transmissions. Corrupted transmissions effectively may cause loss of data and decreased efficiency of the radio channel and may cause retransmissions.

The assignment publication message may comprise the resource assignment. The resource assignment, received by the wireless station, may comprises the start time 135 and the duration 131. The resource assignment, received by the wireless station, may comprises the start time 135 and the end time 136.

The resource assignment according to the invention allows the wireless station of the second wireless communication system access to the radio channel until the start time of the reserved access time by the wireless user equipment. Hence the time until the start of the reserved access time may be labelled freed time 132. The freed time may be available for access to the radio channel by the wireless station.

The assignment publication message 122 according to the invention allows all wireless stations of the second wireless communication system access to the radio channel during the time until the start of the access time reserved by the wireless user equipment. Hence the time until the start of the reserved access time may be labelled freed time 132. The freed time may be available for access to the radio channel by the second wireless communication system.

The radio channel assignment of the first radio access technology may be the same as the radio channel assignment of the second radio access technology, such as wherein the first and second radio access technology operate according to the LTE standard. The radio channel assignment of the first radio access technology may be different from the radio channel assignment of the second radio access technology, such as wherein the first radio access technology operates according to the LTE standard and the second radio access technology operates according to the IEEE802.11 standard. A radio channel of the second radio access technology may overlap with a radio channel of the first radio access technology. Thus to prevent collisions between transmissions of the first and second radio access technology, a resource assignment may prevent a wireless station belonging to the second radio access technology from accessing the one or more radio channels of the first radio access technology. Thus to prevent collisions between transmissions of the first and second radio access technology, a resource assignment may be broadcasted on one or more radio channels of the second radio access technology. Even if radio channels of the first and second radio technology may not overlap but are in close proximity, interference and thus corruption of transmissions may occur. This interference may come forth from the side lobs of the transmission in a radio channel according to a radio access technology. The wireless station may also refrain from accessing a radio channel of the second radio access technology, which radio channel is in such close proximity of the radio channel of the first radio access technology for which the resource assignment is made that interference may take place. The wireless station may also broadcast the assignment publication message in a radio channel of the second radio access technology, which radio channel is in such close proximity of the radio channel of the first radio access technology for which the resource assignment is made that interference may take place.

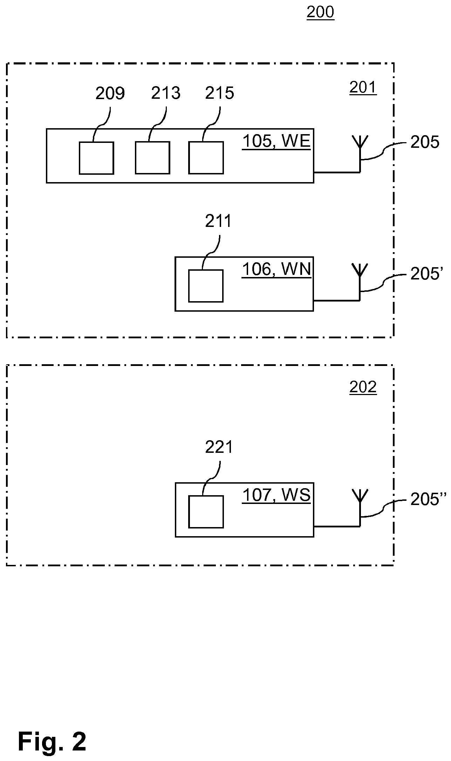

Figure 2 shows schematically an embodiment of a communication arrangement 200 according to the invention. The communication arrangement comprises a first wireless communication system 201 and a second wireless communication system 202. The first wireless communication system comprises wireless user equipment 105 and a wireless access node 106. The second wireless communication system comprises a wireless station 107. The wireless user equipment, the wireless access node and the wireless station all comprise an antenna 205, 205' and 205" for wireless communication.

The wireless user equipment comprises a reservation request unit 209, a resource assignment processing unit 213 and a data transmit unit 215. The reservation request unit starts the process for reserving access time by composing a reservation request message 109. The reservation request unit further transmits the reservation request message to the wireless access node. The resource assignment processing unit receives a resource assignment message 112 comprising a resource assignment. The resource assignment processing unit may, according to the resource assignment, handle set timers for later in time triggering the data transmit unit for transmission. The data transmit unit composes data messages 116, 116' for transmission to the wireless access node. The wireless access node processes 117, 117' the received data messages.

In the embodiment shown, the wireless access node comprises a scheduler 211. The scheduler receives the reservation request message 109 and processes the reservation request message. The scheduler may assign a radio channel for a certain time or a reserved access time for one or more transmissions of the wireless user equipment. The reserved access time may be communicated as a resource assignment. The resource assignment may be specified by a start time 135 and an end time 136. The scheduler may further compose the resource assignment message 112 and may transmit the resource assignment message to the wireless user equipment. The scheduler may further transmit the resource assignment in a reservation message 120 to the wireless station.

The wireless station of the second wireless communication system comprises a reservation handling unit 221. The reservation handling unit receives the reservation message for handling 121 the reservation message. The reservation handling unit may, optionally, as part of the processing, compose a broadcast assignment publication message 122. The broadcast assignment publication message is broadcasted over the radio channel of the second wireless communication system, which radio channel has an overlap or is in close proximity of the radio channel of the first wireless communication system. The broadcast assignment publication message may also be a unicast message to at least one other wireless station, multiple unicast messages to other wireless stations or multiple unicast messages to all other wireless station located within radio range of the wireless station.

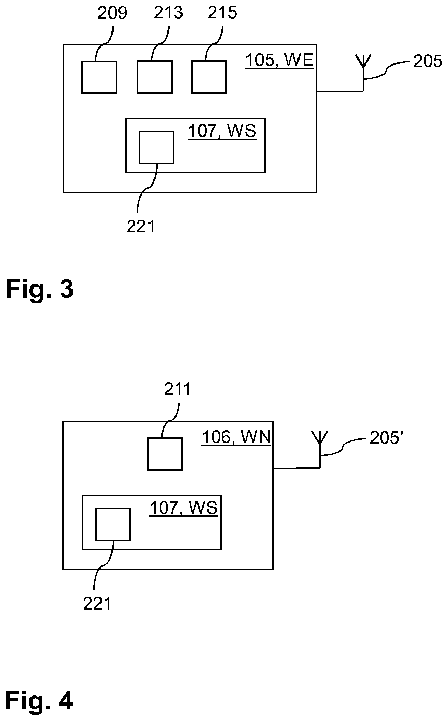

Figure 3 shows schematically an embodiment of a wireless user equipment 105 according to the invention. The wireless user equipment comprises a reservation request unit 209, a resource assignment processing unit 213 and a data transmit unit 215. The wireless user equipment comprises an antenna 205 for wireless communication.

The wireless user equipment further comprises a wireless station 107. The wireless station of a second wireless communication system comprises a reservation handling unit 221. The different units 209, 213, 215 and 221 may have the same behaviour as described above. The reservation handling unit may receive the resource assignment through the reception of the reservation message 120, as described above. Alternatively the reservation handling unit may receive the resource assignment from the resource assignment processing unit 213. This provides the advantage of reducing the amount of wireless transmissions. The wireless station may use the antenna 205 of the wireless user equipment.

For example, if the first radio access technology is LTE enabled for the ISM band and the second radio access technology is WiFi for the ISM band, then an example of a combination is a WiFi enabled mobile phone or smartphone.

Figure 4 shows schematically an embodiment of a wireless access node 106 according to the invention. The wireless access node comprises a scheduler 211. The wireless access node comprises an antenna for wireless communication 205'.

The wireless access node further comprises a wireless station 107. The wireless station of a second wireless communication system comprises a reservation handling unit 221. The different units 211 and 221 may have the same behaviour as described above. The wireless station may use the antenna 205' of the wireless access node.

For example, if the first radio access technology is LTE enabled for the ISM band and the second radio access technology is WiFi for the ISM band, then an example of a combination is a PCell of an LTE enabled network comprising a WiFi interface or an SCell of an LTE enabled network comprising a WiFi interface. PCell is an abbreviation of primary cell, which serves at least the purpose of anchoring the UE to the network by establishing and maintaining a radio resource control (RRC) connection and transmitting signalling information. SCell is an abbreviation of secondary cell, which is used for transmission of downlink and uplink data.

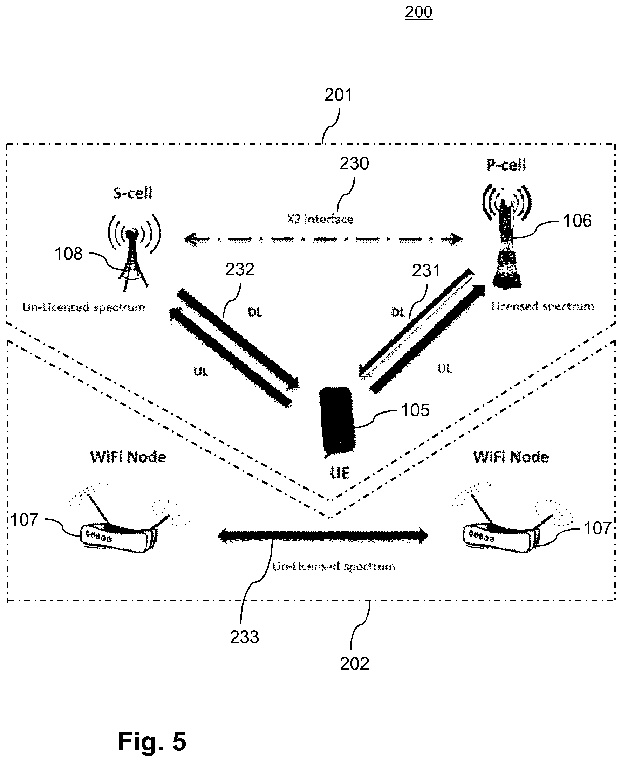

Figure 5 shows schematically an embodiment of a communication arrangement 200 according to the invention. The communication arrangement comprises a first wireless communication system 201 and a second wireless communication system 202. The first wireless communication system comprises wireless user equipment 105, a wireless access node 106 and an auxiliary wireless access node 108. The wireless user equipment may be a mobile phone or smartphone suitable for LTE unlicensed. The wireless access node or P-cell may use the licensed spectrum to communicate 231 according to the LTE standard with the wireless user equipment. The wireless access node may communicate the resource assignments via the licensed spectrum. Communicating the resource assignment via the licensed spectrum provides the advantage of a low collision probability, thus having a high probability of arriving at the recipient.

The auxiliary wireless access node or S-cell may be an auxiliary transmitter for transmitting in the unlicensed spectrum, such as the ISM band. The auxiliary wireless access node and the wireless access node may communicate with each other via an X2 interface 230 or any other suitable interface. The auxiliary wireless access node may be at the same physical position of the wireless access node or may be placed at a distance. Multiple auxiliary wireless access nodes may provide access to the unlicensed spectrum per wireless access node. The radio ranges of the wireless access node and the auxiliary wireless access node may be different. A resource request 110 transmitted to the wireless access node may be for reserving resources at the auxiliary wireless access node. The auxiliary wireless access node or S-cell may use the unlicensed spectrum to communicate 232 according to the LTE-U standard with the wireless user equipment. The resource assignment may be for the unlicensed LTE standard communication.

The second wireless communication system comprises a first wireless station 107 and a third wireless station 107. The first and third wireless station may communicate 233 using the WiFi standard in the unlicensed spectrum, such as the ISM band.

In the case that the scheduler of the wireless access node provides a resource assignment to the wireless user equipment, the scheduler may also provide the resource assignment to the first and/or third wireless stations via a suitable communication standard. The suitable communication standard may be wired and/or wireless.

While the wireless access node assigns a channel of the first wireless communication system, the first and third wireless station should refrain from accessing the same radio channel to prevent collisions of transmissions or an adjacent radio channel to prevent interference of transmissions. For example, if only the first wireless station receives the resource assignment from the wireless access node via a reservation message 120, then the resource assignment may be broadcasted in an assignment publication message 122 for preventing the third wireless station as well as the first wireless station to transmit during the access time of the resource assignment.

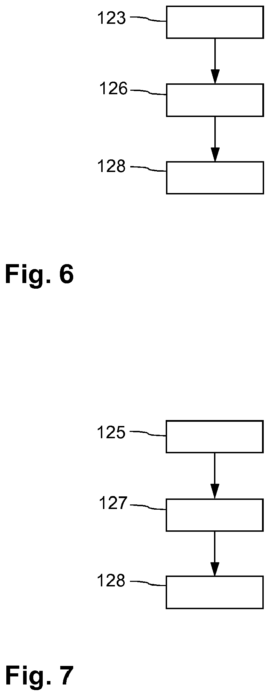

Figure 6 shows schematically an embodiment of a method in accordance with the invention for operating wireless user equipment 105 according to the invention. The wireless user equipment comprises a wireless station 107.

The method starts with transmitting 123 the reservation request message 110. The transmitted reservation request message may comprise a request for reserving access to a radio channel of a first wireless communication system. The reservation request message may comprise a requested end time for requesting an end time of the reserved access. The reservation request message may comprise a requested start time for requesting a start time of the reserved access. The reservation request message may comprise a requested duration for requesting a duration of the reserved access.

After transmitting the method continues with the step of receiving and/or obtaining 126 the resource assignment message 112 from a wireless access node. The resource assignment message may comprise a resource assignment. The resource assignment may internally be provided to the wireless station by the wireless user equipment. Alternatively the method may continue with the step of receiving and/or obtaining 125 a reservation message by the wireless station.

After receiving and/or obtaining, the method continues with the step of preventing 128 access of the wireless station to the radio channel during the access time of the resource assignment.

Figure 7 shows schematically an embodiment of a method of a wireless station 107 according to the invention.

The method starts with receiving and/or obtaining 125 the resource assignment from the wireless access node. The resource assignment may be transmitted to the wireless station via a reservation message 120.

After receiving and/or obtaining, the method may continue with the optional step of wirelessly broadcasting 127 an assignment publication message 122 comprising the resource assignment. Other wireless stations located within radio range of the wireless station may receive the broadcasted assignment publication message for preventing transmissions of the other wireless stations during the time the radio channel is reserved for access for the wireless user equipment.

After the step of receiving and/or obtaining or broadcasting, the method continues with the step of preventing 128 transmissions of the wireless station during the time the radio channel is reserved for access for the wireless user equipment.

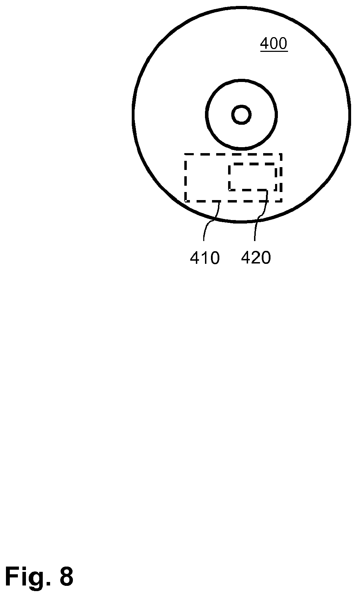

Figure 8 schematically shows an embodiment of a computer program product, computer readable medium and/or non-transitory computer readable storage medium 400 having a writable part 410 comprising including a computer program 420, the computer program comprising including instructions for causing a processor system to perform a method of an embodiment of the invention. The computer program may be embodied on the computer readable medium as physical marks or by means of magnetization of the computer readable medium. However, any other suitable embodiment is conceivable as well. Furthermore, it will be appreciated that, although the computer readable medium 400 is shown here as an optical disc, the computer readable medium 400 may be any suitable computer readable medium, such as a hard disk, solid state memory, flash memory, etc., and may be non-recordable or recordable. The computer program comprises instructions for causing a processor system to perform said method of an embodiment.

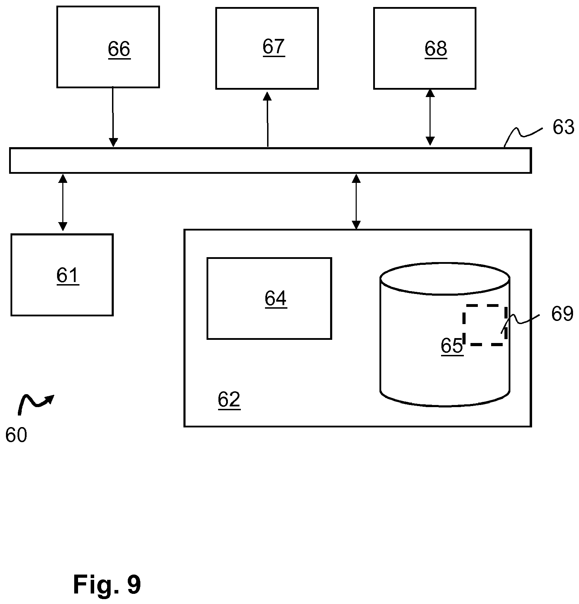

Figure 9 is a block diagram illustrating an exemplary data processing system that may be used as a part of a communication arrangement 200, first wireless communication system 201, second wireless communication system 202, wireless user equipment 105, wireless access node 106, such as a base station, or wireless station 107.

Data processing system 60 may include at least one processor 61 coupled to memory elements 62 through a system bus 63. As such, the data processing system 60 may store program code within memory elements 62. Further, processor 61 may execute the program code accessed from memory elements 62 via system bus 63. In one aspect, data processing system 60 may be implemented as a computer that is suitable for storing and/or executing program code. It should be appreciated, however, that data processing system 60 may be implemented in the form of any system including a processor and memory that is capable of performing the functions described within this specification.

Memory elements 62 may include one or more physical memory devices such as, for example, local memory 64 and one or more bulk storage devices 65. Local memory may refer to random access memory or other non-persistent memory device(s) generally used during actual execution of the program code. A bulk storage device 65 may be implemented as a hard drive or other persistent data storage device. The data processing system 60 may also include one or more cache memories (not shown) that provide temporary storage of at least some program code in order to reduce the number of times program code must be retrieved from bulk storage device 65 during execution.

Input/output (I/O) devices depicted as input device 66 and output device 67 optionally can be coupled to the data processing system 60. Examples of input devices may include, but are not limited to, for example, a keyboard, a pointing device such as a mouse, a touchscreen, or the like. Examples of output device may include, but are not limited to, for example, a monitor or display, speakers, or the like. Input device 66 and/or output device 67 may be coupled to data processing system 60 either directly or through intervening I/O controllers. A network adapter 68 may also be coupled to data processing system 60 to enable it to become coupled to other systems, computer systems, remote network devices, and/or remote storage devices through intervening private or public networks. The network adapter 68 may comprise a data receiver for receiving data that is transmitted by said systems, devices and/or networks to said data processing system 60 and a data transmitter for transmitting data to said systems, devices and/or networks. Modems, cable modems, and Ethernet cards are examples of different types of network adapters that may be used with data processing system 60.

As pictured in Figure 9, memory elements 62 may store an application 69. It should be appreciated that data processing system 60 may further execute an operating system (not shown) that can facilitate execution of the application. Applications, being implemented in the form of executable program code, can be executed by data processing system 60, e.g., by processor 61. Responsive to executing the application 69, the data processing system 60 may be configured to perform one or more operation as disclosed in the present application in further detail.

In one aspect, for example, data processing system 60 may represent a multipoint transmission control system MTC or a user device UE. In that case, application 69 may represent a client application that, when executed, configures data processing system 60 to perform the various functions described herein with reference to an MTC or a user equipment. Examples of an MTC include a base station of a telecommunications network providing cellular wireless access, e.g. a NodeB or an eNB. The user equipment can include, but is not limited to, a personal computer, a portable computer, a mobile phone, or the like.

In another aspect, data processing system 60 may represent a transmission node TN as described herein, in which case application 69, when executed, may configure data processing system 60 to perform operations as described in the present disclosure.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In an-other embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard disk drive or any type of solid-state random-access semiconductor memory) on which alterable information is stored.

| Reference list | |
|---|---|
| 60 | data processing system |
| 61 | processor |
| 62 | memory elements |
| 63 | system bus |
| 64 | local memory |
| 65 | storage devices |
| 66 | input device |
| 67 | output device |
| 68 | network adapter |
| 69 | application |
| 100 | sequence diagram |
| 105 | wireless user equipment |
| 106 | wireless access node |
| 107 | wireless station |
| 108 | auxiliary wireless access node |
| 109 | composing reservation request message |
| 110 | reservation request message |
| 111 | scheduling |
| 112 | resource assignment message |
| 113 | handling resource assignment message |
| 114 | wait for transmission |
| 115 | transmission processing |
| 116, 116' | transmission data messages |
| 117, 117' | processing received data message |
| 120 | reservation message |
| 121 | handling reservation message |
| 122 | assignment publication message |
| 123 | transmitting reservation request message |
| 125 | receiving and/or obtaining reservation message by the wireless station |
| 126 | receiving and/or obtaining resource assignment message by the wireless user equipment |
| 127 | broadcasting assignment publication message |
| 128 | preventing access |
| 130 | reserved time prior art |
| 131 | duration access time |
| 132 | freed time |
| 135 | start time |
| 136 | end time |
| 200 | communication arrangement |
| 201 | first wireless communication system |
| 202 | second wireless communication system |
| 205, 205', 205" | antenna |
| 209 | reservation request unit |
| 211 | scheduler |
| 213 | resource assignment processing unit |
| 215 | data transmit unit |
| 221 | reservation handling unit |
| 230 | X2 interface |
| 231 | LTE licensed communication |
| 232 | LTE unlicensed communication |
| 233 | WiFi communication |
| 400 | computer program product |
| 410 | writable part |
| 420 | computer program |

## Claims

1. Communication arrangement (200) comprising a first wireless communication system (201) configured for accessing a radio channel and a second wireless communication system (202) configured for accessing the radio channel; wherein the first wireless communication system comprises:
- wireless user equipment (105) comprising a reservation request unit (209) configured for transmitting a resource request message (110) for reserving access to the radio channel; and
- a wireless access node (106) comprising a scheduler (211) configured for receiving the resource request message and upon receiving, generating and providing a resource assignment for reserving access time for the wireless user equipment to access the radio channel;
wherein the second wireless communication system comprises a wireless station (107) comprising a reservation handling unit (221) configured for obtaining the resource assignment from the wireless access node and for preventing the wireless station from accessing the radio channel during the access time of the resource assignment; and
wherein the resource assignment comprises a start time (135) for indicating a start of the access time of the resource assignment for allowing the wireless station access to the radio channel until the start time.

2. Communication arrangement according to the preceding claim, wherein the resource assignment also comprises an end time (136) for indicating an end of the access time of the resource assignment.

3. Communication arrangement according to any of the preceding claims, wherein the scheduler (211) is further configured for composing a resource assignment message (112), which is transmitted to the wireless user equipment, the resource assignment message comprising the resource assignment.

4. Communication arrangement according to the preceding claim, wherein the first and the second wireless communication system adhere to a different radio access technology.

5. Communication arrangement according to any of the preceding claims, wherein the first wireless communication system is configured to operate according to an LTE standard, such as according to an LTE-LAA standard and/or an LTE-U standard, and wherein the resource assignment is configured for providing access to the radio channel for an up-link transmission and, when depending on claim 3, wherein the resource assignment message is an up-link grant message.

6. Wireless station (107) configured for use in a communication arrangement (200), the communication arrangement comprising a first wireless communication system (201) configured for accessing a radio channel and a second wireless communication system (202) configured for accessing the radio channel; wherein the first wireless communication system comprises:
- wireless user equipment (105) comprising a reservation request unit (209) configured for transmitting a resource request message (110) for reserving access to the radio channel; and
- a wireless access node (106) comprising a scheduler (211) configured for receiving the resource request message and upon receiving, generating and providing a resource assignment for reserving access time for the wireless user equipment to access the radio channel;
wherein the second wireless communication system comprises the wireless station (107) comprising a reservation handling unit (221) configured for obtaining the resource assignment from the wireless access node and for preventing the wireless station from accessing the radio channel during the access time of the resource assignment; and
wherein the resource assignment comprises a start time (135) for indicating a start of the access time of the resource assignment for allowing the wireless station access to the radio channel until the start time.

7. Wireless station according to the preceding claim, wherein the reservation handling unit is further configured for, upon obtaining the resource assignment, wirelessly broadcasting an assignment publication message (122) comprising the resource assignment for preventing other wireless stations of the second wireless communication system located within the radio range from accessing the radio channel during the access time of the resource assignment.

8. Wireless station according to claim 6 or 7,
wherein the second wireless communication system is configured to operate according to an IEEE802.11 standard and the wireless station is an IEEE802.11 access point or IEEE802.11 client.

9. Wireless station according to claim 7
wherein the second wireless communication system is configured to operate according to an IEEE802.11 standard and the wireless station is an IEEE802.11 access point or IEEE802.11 client; and
the assignment publication message is a clear to send message according to an IEEE802.11 standard, which is extended for incorporating the start time or a request to send message according to an IEEE802.11 standard, which is extended for incorporating the start time.

10. Wireless user equipment (105) configured for use in a communication arrangement (200), the communication arrangement comprising a first wireless communication system (201) configured for accessing a radio channel and a second wireless communication system (202) configured for accessing the radio channel; wherein the first wireless communication system comprises:
- the wireless user equipment (105) comprising a reservation request unit (209) configured for transmitting a resource request message (110) for reserving access to the radio channel; and
- a wireless access node (106) comprising a scheduler (211) configured for receiving the resource request message and upon receiving, generating and providing a resource assignment for reserving access time for the wireless user equipment to access the radio channel;
wherein the second wireless communication system comprises a wireless station (107) comprising a reservation handling unit (221) configured for obtaining the resource assignment from the wireless access node and for preventing the wireless station from accessing the radio channel during the access time of the resource assignment;
wherein the resource assignment comprises a start time (135) for indicating a start of the access time of the resource assignment for allowing the wireless station access to the radio channel until the start time; and
wherein the wireless user equipment comprises the wireless station (107).

11. Wireless user equipment according to the preceding claim, configured to operate according to an LTE standard, such as according to an LTE-LAA standard and/or an LTE-U standard, the wireless user equipment being a user equipment (UE).

12. Wireless access node (106) configured for use in a communication arrangement (200), the communication arrangement comprising a first wireless communication system (201) configured for accessing a radio channel and a second wireless communication system (202) configured for accessing the radio channel; wherein the first wireless communication system comprises:
- wireless user equipment (105) comprising a reservation request unit (209) configured for transmitting a resource request message (110) for reserving access to the radio channel; and
- the wireless access node (106) comprising a scheduler (211) configured for receiving the resource request message and upon receiving, generating and providing a resource assignment for reserving access time for the wireless user equipment to access the radio channel;
wherein the second wireless communication system comprises a wireless station (107) comprising a reservation handling unit (221) configured for obtaining the resource assignment from the wireless access node and for preventing the wireless station from accessing the radio channel during the access time of the resource assignment;
wherein the resource assignment comprises a start time (135) for indicating a start of the access time of the resource assignment for allowing the wireless station access to the radio channel until the start time, wherein the wireless access node (106) comprises the wireless station (107).

13. Wireless access node according to the preceding claim, configured to operate according to an LTE standard, such as according to an LTE-LAA standard and/or an LTE-U standard, and being an E-UTRAN Node B or Evolved Node B (eNB).

14. Method for operating a wireless station (107) for a communication arrangement (200), the communication arrangement comprising a first wireless communication system (201) configured for accessing a radio channel and a second wireless communication system (202) configured for accessing the radio channel; wherein the first wireless communication system comprises:
- wireless user equipment (105) comprising a reservation request unit (209) configured for transmitting a resource request message (110) for reserving access to the radio channel; and
- a wireless access node (106) comprising a scheduler (211) configured for receiving the resource request message and upon receiving, generating and providing a resource assignment for reserving access time for the wireless user equipment to access the radio channel;
wherein the second wireless communication system comprises the wireless station (107) comprising a reservation handling unit (221) configured for obtaining the resource assignment from the wireless access node and for preventing the wireless station from accessing the radio channel during the access time of the resource assignment;
wherein the resource assignment comprises a start time (135) for indicating a start of the access time of the resource assignment for allowing the wireless station access to the radio channel until the start time; and
wherein the method comprises the steps of:
- obtaining (125) the resource assignment from the wireless access node; and
- preventing (128) the wireless station from accessing the radio channel during the access time of the resource assignment.

15. Method for operating wireless user equipment (105) for a communication arrangement (200), the communication arrangement comprising a first wireless communication system (201) configured for accessing a radio channel and a second wireless communication system (202) configured for accessing the radio channel; wherein the first wireless communication system comprises:
- the wireless user equipment (105) comprising a reservation request unit (209) configured for transmitting a resource request message (110) for reserving access to the radio channel; and
- a wireless access node (106) comprising a scheduler (211) configured for receiving the resource request message and upon receiving, generating and providing a resource assignment for reserving access time for the wireless user equipment to access the radio channel;
wherein the second wireless communication system comprises a wireless station (107) comprising a reservation handling unit (221) configured for obtaining the resource assignment from the wireless access node and for preventing the wireless station from accessing the radio channel during the access time of the resource assignment;
wherein the resource assignment comprises a start time (135) for indicating a start of the access time of the resource assignment for allowing the wireless station access to the radio channel until the start time; and
wherein the method comprises the steps of:
- transmitting the resource request message (110) for reserving access to the radio channel;
- obtaining (126) the resource assignment from the wireless access node; and
- preventing (128) the wireless station from accessing the radio channel during the access time of the resource assignment.
